# FASCICULE DE BREVET EUROPEEN

(11) **EP 2 331 387 B1**
(45) Date de publication et mention de la délivrance du brevet: **02.01.2013**
(21) Numéro de dépôt: 09740431.3
(22) Date de dépôt: 04.08.2009
(51) Int. Cl.: B62D 25/07, B60J 9/00, B60R 13/07, B29C 45/00

(54) **AGENCEMENT POUR L'EVACUATION DE L'EAU DU TOIT D'UN VEHICULE AUTOMOBILE**
ANORDNUNG ZUM ENTFERNEN VON WASSER VOM DACH EINES KRAFTFAHRZEUGS
ARRANGEMENT FOR REMOVING WATER FROM THE ROOF OF AN AUTOMOBILE

(30) Priorité: 08.09.2008 FR 0804926
(43) Date de publication de la demande: 15.06.2011
(73) Titulaire: Renault S.A.S., 92100 Boulogne-Billancourt (FR)
(72) Inventeur: MORAL, Angel, E-74003 Valladolid (ES); SANTANDREU, Pascal, F-78125 Emance (FR); BISROR, Olivier, F-78960 Voisins Le Bretonneux (FR)
(86) Numéro de dépôt international: PCT/FR2009/051550
(87) Numéro de publication internationale: WO 2010/026326

(56) Documents cités:
- DE-A1- 19 808 898
- DE-B3-102005 011 478

## Description

L'invention concerne un agencement pour évacuer l'eau d'un toit de véhicule automobile. Elle concerne aussi un procédé de fabrication d'un tel dispositif. Enfin, elle concerne un véhicule automobile en tant que tel équipé d'un tel dispositif.

Classiquement, l'évacuation d'eau d'un toit d'un véhicule automobile est réalisée par un tuyau rapporté sous une plaque soudée à un élément de structure du toit d'un véhicule automobile. Cette plaque comprend une ouverture correspondant au tuyau et l'eau s'évacue depuis la surface supérieure du toit du véhicule par cette ouverture puis est guidée vers le bas par le tuyau. Dans le cas des pavillons soudés par laser sur les éléments latéraux de la carrosserie, par exemple dans le cas des grands toits ouvrants, pour lesquels il n'existe pas de gouge de pavillon dans laquelle l'eau peut classiquement s'évacuer, la solution traditionnelle consiste en une plaque de renfort montée sur la partie latérale du pavillon. Cette solution d'évacuation d'eau génère des volumes de rétention d'eau_{.} Un agencement selon le préambule de la revendication 1 est connu du DE-B-102005011478.

Il existe un besoin d'une solution alternative d'évacuation d'eau d'un toit d'un véhicule automobile.

Un objectif de la présente invention est donc de proposer un dispositif d'évacuation d'eau pour véhicule automobile, adapté à un grand nombre de véhicules automobiles incluant ceux comprenant une structure de toit soudée au laser.

L'invention porte sur un agencement pour l'évacuation de l'eau du toit d'un véhicule automobile, comprenant un moyen d'engagement destiné à une fixation dans une ouverture du toit du véhicule automobile, et comprenant une pièce plastique coudée comprenant une première extrémité adaptée pour une liaison avec le moyen d'engagement, caractérisé en ce qu'elle comprend une seconde extrémité adaptée pour une liaison avec un tuyau d'évacuation d'eau.

La première extrémité adaptée pour une liaison avec un moyen d'engagement peut comprendre un moyen adapté pour le clippage dans le chambrage du moyen d'engagement. Elle peut comprendre un taraudage. Enfin, elle peut comprendre au moins un doigt de détrompage pour garantir la bonne orientation du dispositif.

La pièce plastique peut présenter un logement adapté pour le positionnement d'un joint d'étanchéité.

L'invention porte aussi sur un procédé de fabrication d'un dispositif d'un agencement d'évacuation d'eau pour véhicule automobile, caractérisé en ce qu'il comprend une étape d'injection dans un moule d'un matériau plastique pour former une pièce plastique coudée comprenant une première extrémité adaptée pour une liaison avec un moyen d'engagement pour une tôle de véhicule automobile, et une seconde extrémité adaptée pour une liaison avec un tuyau d'évacuation d'eau.

Le moyen d'engagement peut former un écrou noyé, permettant sa pose en aveugle dans l'ouverture du toit du véhicule automobile, destiné à être serti par traction à la tôle.

L'invention porte aussi sur un véhicule automobile comprenant un agencement pour l'évacuation de l'eau de son toit tel que décrit précédemment.

Ces objets, caractéristiques et avantages de la présente invention seront exposés en détail dans la description suivante d'un mode d'exécution particulier fait à titre non-limitatif en relation avec les figures jointes parmi lesquelles :

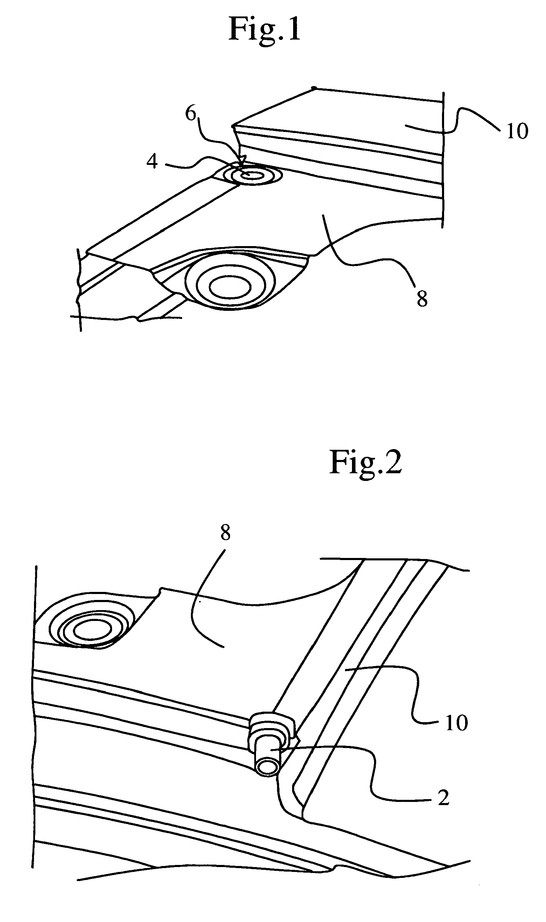

La figure 1 est une représentation schématique d'un agencement d'évacuation d'eau selon un mode d'exécution de l'invention ;
la figure 2 représente une vue de dessous de l'agencement représenté sur la figure précédente ;

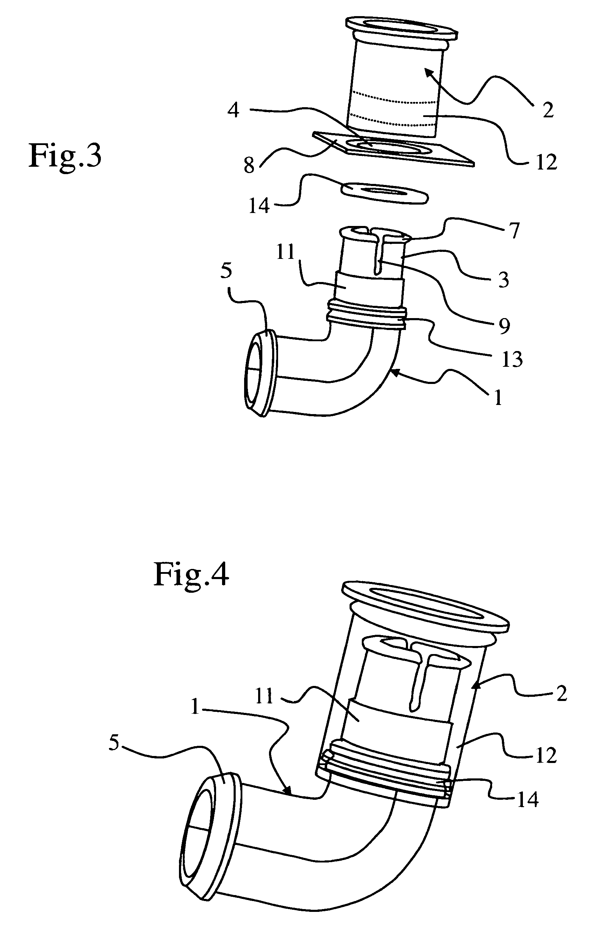

la figure 3 représente une vue éclatée de l'agencement selon le mode d'exécution de l'invention ;
la figure 4 représente une vue de l'agencement précédent après assemblage ;
les figures 5a et 5b représentent des détails d'un dispositif de l'agencement selon le mode d'exécution de l'invention.

Selon l'invention, l'évacuation d'eau est mise en oeuvre par l'agencement de deux éléments principaux, une pièce plastique 1 associée à un moyen d'engagement 2.

Le moyen d'engagement 2 est adapté à un montage dans une position sensiblement verticale directement dans une ouverture 4 réalisée dans la structure du toit, à proximité d'un angle 6 du pavillon, aux abords immédiats de la traverse 10 de la structure du véhicule. Dans le cas d'un véhicule avec grand toit ouvrant, cette ouverture est réalisée dans une pièce de renfort d'angle 8.

Selon un mode d'exécution particulièrement avantageux, le moyen d'engagement 2 peut consister en un écrou noyé, permettant sa pose en aveugle dans l'ouverture 4. Il est serti par traction à la tôle et lors du passage en étuve cataphorèse, son joint thermofusible flue et assure l'étanchéité mécanique du moyen d'engagement 2 à la caisse.

Selon le mode d'exécution illustré sur les figures, le moyen d'engagement 2 consiste en un écrou cylindrique, comprenant un taraudage 12. En variante, cet écrou pourrait comprendre une autre forme présentant des gorges et épaulements sans sortir du contexte de l'invention.

L'agencement selon le mode d'exécution de l'invention comprend de plus une pièce plastique 1, comprenant une première extrémité 3 destinée à une liaison avec le moyen d'engagement 2, et une seconde extrémité 5 adaptée à une liaison avec un tuyau d'évacuation d'eau non représenté. La pièce plastique forme un coude avec un angle prédéfini afin de relier la partie sensiblement verticale du moyen d'engagement 2 provenant du toit du véhicule automobile au tuyau d'évacuation d'eau.

La première extrémité 3 de la pièce plastique, qui peut être en polyamide par exemple, comprend des moyens 7 de liaison par clippage sur chambrage du moyen d'engagement 2, et un taraudage 11 coopérant avec le taraudage 12 du moyen d'engagement 2. Enfin, elle comprend un doigt de détrompage 9 qui garantit sa bonne orientation lors de son montage sur le moyen d'engagement 2.

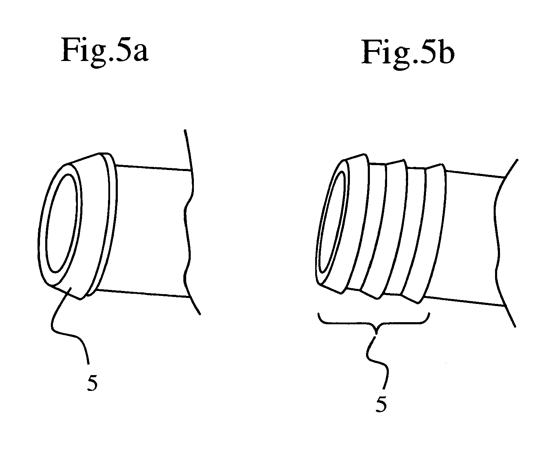

Sa seconde extrémité 5, illustrée sur la figure 5a, comprend une forme d'olive pour permettre sa liaison avec un tuyau d'évacuation. La figure 5b représente une variante d'exécution dans laquelle elle se présente sous une forme cannelée. Le tuyau pourrait être fixé de différentes manières au niveau de l'extrémité 5 de la pièce plastique, par clipsage, collage, soudure par ultrasons...

La pièce plastique 1 peut être réalisée en une seule opération d'injection de matériau plastique, dans un moule mono ou multi-empreinte. Ensuite, un joint holmet 14 peut être fixé dans un emplacement 13 prévu sur cette pièce. En variante, une matière gonflante peut être injectée dans le moule pour former le joint d'étanchéité 14 dans une solution de fabrication par bi-injection.

La solution décrite atteint ainsi les objets recherchés et présente les avantages suivants :
- L'agencement est adapté à tout type de pavillon de véhicules automobiles, et réduit les zones de rétention d'eau.
- l'agencement est simplifié et repose sur une pièce plastique qui peut être standardisée et utilisée sur de nombreux véhicules ;
- le montage final du tuyau d'évacuation sur la pièce plastique est très simple.

## Revendications

1. Agencement pour l'évacuation de l'eau du toit d'un véhicule automobile, comprenant un moyen d'engagement (2) destiné à une fixation dans une ouverture (4) du toit du véhicule automobile, et comprenant une pièce plastique (1) coudée comprenant une première extrémité (3) adaptée pour une liaison avec le moyen d'engagement (2), **caractérisé en ce qu'**elle comprend une seconde extrémité (5) adaptée pour une liaison avec une tuyau d'évacuation d'eau.

2. Agencement pour l'évacuation de l'eau du toit d'un véhicule automobile selon la revendication précédente, **caractérisé en ce que** le moyen d'engagement (2) forme un écrou noyé, permettant sa pose en aveugle dans l'ouverture (4) du toit du véhicule automobile, destiné à être serti par traction à la tôle.

3. Agencement pour l'évacuation d'eau du toit d'un véhicule automobile selon l'une des revendications précédentes, **caractérisé en ce que** la première extrémité (3) adaptée pour une liaison avec un moyen d'engagement (2) comprend un moyen (7) adapté pour le clippage dans le chambrage du moyen d'engagement (2).

4. Agencement pour l'évacuation d'eau du toit d'un véhicule automobile selon l'une des revendications précédentes, **caractérisé en ce que** la première extrémité (3) adaptée pour une liaison avec un moyen d'engagement (2) comprend un taraudage (1).

5. Agencement pour l'évacuation d'eau du toit d'un véhicule automobile selon l'une des revendications précédentes, **caractérisé en ce que** la première extrémité (3) adaptée pour une liaison avec un moyen d'engagement (2) comprend au moins un doigt de détrompage (9) pour garantir la bonne orientation du dispositif.

6. Agencement pour l'évacuation d'eau du toit d'un véhicule automobile selon l'une des revendications précédentes, **caractérisé en ce que** la pièce plastique présente un logement (13) adapté pour le positionnement d'un joint d'étanchéité (14).

7. Procédé de fabrication d'un agencement pour l'évacuation d'eau du toit d'un véhicule automobile selon l'une des revendications précédentes, **caractérisé en ce qu'**il comprend une étape d'injection dans un moule d'un matériau plastique pour former une pièce plastique (1) coudée comprenant une première extrémité (3) adaptée pour une liaison avec un moyen d'engagement (2) pour une tôle (8) de véhicule automobile, et une seconde extrémité (5) adaptée pour une liaison avec un tuyau d'évacuation d'eau.

8. Véhicule automobile comprenant un agencement pour l'évacuation de l'eau de son toit selon l'une des revendications 1 à 6.

## Claims

1. Arrangement for removing water from the roof of a motor vehicle, comprising a means of engagement (2) intended to be fitted into an opening (4) in the roof of the motor vehicle, and comprising a bent plastic component (1) comprising a first end (3) designed for connection with the means of engagement (2), **characterized in that** it comprises a second end (5) designed for connection to a water discharge pipe.

2. Arrangement for removing water from the roof of a motor vehicle according to the preceding claim, **characterized in that** the means of engagement (2) forms a sunken nut allowing it to be fitted blind into the opening (4) in the roof of the motor vehicle, and intended to be crimped to the sheet metalwork panel by pulling.

3. Arrangement for removing water from the roof of a motor vehicle according to one of the preceding claims, **characterized in that** the first end (3) designed for connection to a means of engagement (2) comprises a means (7) designed to be clipped into the counterbore of the means of engagement (2).

4. Arrangement for removing water from the roof of a motor vehicle according to one of the preceding claims, **characterized in that** the first end (3) designed for connection to a means of engagement (2) comprises a tapped thread (11).

5. Arrangement for removing water from the roof of a motor vehicle according to one of the preceding claims, **characterized in that** the first end (3) designed for connection to a means of engagement (2) comprises at least one polarizing lug (9) to ensure the correct orientation of the device.

6. Arrangement for removing water from the roof of a motor vehicle according to one of the preceding claims, **characterized in that** the plastic component has a housing (13) designed to accept a seal (14).

7. Method of manufacturing an arrangement for removing water from the roof of a motor vehicle according to one of the preceding claims, **characterized in that** it comprises a step of injecting a plastics material into a mold to form a bent plastic component (1) comprising a first end (3) designed for connection with a means of engagement (2) for a sheet metalwork panel (8) of a motor vehicle, and a second end (5) designed for connection to a water discharge pipe.

8. Motor vehicle comprising an arrangement for removing water from its roof according to one of Claims 1 to 6.

## Patentansprüche

1. Anordnung für den Abfluss von Wasser vom Dach eines Kraftfahrzeugs, die eine Einsteckeinrichtung (2) enthält, die für eine Befestigung in einer Öffnung (4) des Dachs des Kraftfahrzeugs bestimmt ist, und ein gekrümmtes Kunststoffteil (1) mit einem ersten Ende (3) enthält, das für eine Verbindung mit der Einsteckeinrichtung (2) geeignet ist, **dadurch gekennzeichnet, dass** es ein zweites Ende (5) aufweist, das für eine Verbindung mit einem Wasserabflussrohr geeignet ist.

2. Anordnung für den Abfluss von Wasser vom Dach eines Kraftfahrzeugs nach dem vorhergehenden Anspruch, **dadurch gekennzeichnet, dass** die Einsteckeinrichtung (2) eine Einnietmutter formt, die ihr Blindeinsetzen in die Öffnung (4) des Dachs des Kraftfahrzeugs erlaubt, die dazu bestimmt ist, durch Zug am Blech eingenietet zu werden.

3. Anordnung für den Abfluss von Wasser vom Dach eines Kraftfahrzeugs nach einem der vorhergehenden Ansprüche, **dadurch gekennzeichnet, dass** das erste Ende (3), das für eine Verbindung mit einer Einsteckeinrichtung (2) geeignet ist, eine Einrichtung (7) enthält, die für das Einrasten in die Einsenkung der Einsteckeinrichtung (2) geeignet ist.

4. Anordnung für den Abfluss von Wasser vom Dach eines Kraftfahrzeugs nach einem der vorhergehenden Ansprüche, **dadurch gekennzeichnet, dass** das erste Ende (3), das für eine Verbindung mit einer Einsteckeinrichtung (2) geeignet ist, ein Innengewinde (11) enthält.

5. Anordnung für den Abfluss von Wasser vom Dach eines Kraftfahrzeugs nach einem der vorhergehenden Ansprüche, **dadurch gekennzeichnet, dass** das erste Ende (3), das für eine Verbindung mit einer Einsteckeinrichtung (2) geeignet ist, mindestens einen Unverwechselbarkeitsfinger (9) enthält, um die richtige Ausrichtung der Vorrichtung zu gewährleisten.

6. Anordnung für den Abfluss von Wasser vom Dach eines Kraftfahrzeugs nach einem der vorhergehenden Ansprüche, **dadurch gekennzeichnet, dass** das Kunststoffteil eine Aufnahme (13) aufweist, die für die Positionierung einer Dichtung (14) geeignet ist.

7. Verfahren zur Herstellung einer Anordnung für den Abfluss von Wasser vom Dach eines Kraftfahrzeugs nach einem der vorhergehenden Ansprüche, **dadurch gekennzeichnet, dass** es einen Schritt des Einspritzens eines Kunststoffmaterials in ein Formwerkzeug zum Formen eines gekrümmten Kunststoffteils (1), das ein erstes Ende (3) enthält, das für eine Verbindung mit einer Einsteckeinrichtung (2) für ein Blech (8) eines Kraftfahrzeugs geeignet ist, und ein zweites Ende (5) enthält, das für eine Verbindung mit einem Wasserabflussrohr geeignet ist.

8. Kraftfahrzeug, das eine Anordnung für den Abfluss von Wasser vom Dach eines Kraftfahrzeugs nach einem der Ansprüche 1 bis 6 enthält.
